Europäisches Patentamt

(19) European Patent Office

Office européen des brevets

(11) Publication number: **0 189 797**
**B1**

(12) **EUROPEAN PATENT SPECIFICATION**

(45) Date of publication of patent specification: **24.05.89**

(21) Application number: **86100568.4**

(22) Date of filing: **17.01.86**

(51) Int. Cl.⁴: **G 21 C 3/32**

(54) Locking tube removal fixture for use with a reconstitutable fuel assembly.

(30) Priority: **28.01.85 US 695762**

(43) Date of publication of application:
**06.08.86 Bulletin 86/32**

(45) Publication of the grant of the patent:
**24.05.89 Bulletin 89/21**

(84) Designated Contracting States:
**BE DE FR GB IT SE**

(56) References cited:
**US-A-3 835 520**
**US-A-4 030 975**
**US-A-4 292 130**
**US-A-4 358 421**

(73) Proprietor: **WESTINGHOUSE ELECTRIC CORPORATION**
**Westinghouse Building Gateway Center**
**Pittsburgh Pennsylvania 15235 (US)**

(72) Inventor: **Shallenberger, John Milton**
**120 W. Chapel Ridge Road**
**Pittsburgh Pennsylvnia 15238 (US)**
Inventor: **Ferlan, Stephen Joseph**
**895 Rita Drive**
**Pittsburgh Pennsylvania 15221 (US)**

(74) Representative: **Patentanwälte Dipl.-Ing. R.**
**Holzer Dipl.-Ing. (FH) W. Gallo**
**Ludwigstrasse 26**
**D-8900 Augsburg (DE)**

Courier Press, Leamington Spa, England.

## Description

The present invention relates generally to fuel assemblies for nuclear reactors and, more particularly, to a fixture for removing locking tubes from their locking positions in a removable top nozzle of a reconstitutable fuel assembly.

In most nuclear reactors, the reactor core is comprised of a large number of elongate fuel assemblies. Conventional designs of these fuel assemblies include a plurality of fuel rods and control-rod guide thimbles held in an organized array of grids spaced along the fuel assembly and attached to the control-rod guide thimbles. Top and bottom nozzles on opposite ends of the fuel assembly are secured to end portions of the guide thimbles extending somewhat above and below the ends of the fuel rods, the upper end portions of the guide thimbles, which may be sleeves affixed to the latter, extending into passageways of the adapter plate of the top nozzle and therein being connected to the adapter plate. ·

During operation of a fuel assembly in a nuclear reactor, some of the fuel rods may occasionally develop cracks resulting primarily from internal stresses, which creates the possibility that radioactive fission produces may enter the primary coolant of the reactor. Such products might also be released into a flooded reactor cavity during refueling operations or into the coolant circulated through pools where the spent fuel assemblies are stored. Since the fuel rods are contained within the integral assembly of guide thimbles affixed to the top and bottom nozzles, it is difficult to detect and remove the failed rods.

Until recently, in order to gain access to fuel rods it was necessary to remove the affected assembly from the nuclear reactor core and then to break welds formed to secure the nozzles to the guide thimbles. This required destructive action which often rendered the fuel assembly unfit for further use in the reactor because of the damage done to both the guide thimbles and the upper nozzle which prohibited rewelding.

In view of the high costs associated with replacing fuel assemblies, considerable interest has arisen in reconstitutable fuel assembles with a view to minimizing operating and maintenance expenses. The general approach to making a fuel assembly reconstitutable is to provide it with a removable top nozzle, such as disclosed in EP application No. 84306629.1 (publication No. 0140588), for example, according to which the top nozzle is mounted on upper end portions of the control-rod guide thimbles by means of an attaching structure including a plurality of outer sockets formed in the adapter plate of the top nozzle, a plurality of inner sockets each formed on the upper end portions of the respective guide thimbles, and a plurality of removable locking tubes inserted in the inner sockets to maintain them in locking engagement with the outer sockets. Each outer socket is in the form of a passageway extending through the adapter plate and having an annular groove formed in its peripheral wall.

Each inner socket is in the form of a hollow upper end portion of the guide thimble having an annular bulge which seats in the annular groove within the associated passageway when the guide thimble end portion is inserted therein. A plurality of elongate axial slots is provided in the upper end portion of each guide thimble to enable the slotted end portion to elastically collapse inward so as to allow the bulge with the layer diameter to be inserted into and removed from the annular groove in the passageway of the adapter plate.

Each locking tube is inserted from above the top nozzle into a locking position within the inner socket formed by the end portion of the associated guide thimble. When in its locking position, the locking tube retains the bulge on the inner socket in locking engagement with the annular groove in the outer socket and thereby prevents the inner socket from being collapsed and withdrawn from the outer socket. In this manner, the locking tubes maintain the inner sockets in locking engagement with the outer sockets, and thereby assure that the top nozzle remains securely attached to the upper ends of the guide thimbles. In order to secure the locking tubes against coming loose from their locking positions under vibration or shock, suitable means, such as a bulge, may be formed on each locking tube, after insertion thereof in its locking position, to provide interlocking engagement of the bulge with the circumferential groove defined by the concave inside of the bulge on the upper end portion of the guide thimble.

The locking tubes must be removed from their locking positions prior to removal of the top nozzle the fuel assembly, and they must be returned to their locking positions after the top nozzle has been remounted on the guide thimbles. While it is possible to remove and replace locking tubes one by one, i.e. each individually, the invention has for its principal object to provide apparatus permitting a plurality, such as a whole complement, of locking tubes to be removed or replaced in one single operation, thereby to save time and, hence, reduce the cost involved in reconstituting a fuel assembly.

The invention accordingly resides in a fixture for simultaneously removing a plurality of locking tubes from locking positions within upper end portions of guide thimbles inserted in passageways formed through a plate of a top nozzle of a reconstitutable nuclear fuel assembly, characterized by the combination comprising:

(a) a tool guide including means for mounting and positioning the fixture upon said top nozzle, said tool guide having openings which extend therethrough and which are arrayed in a pattern such as to be axially aligned with the respective passageways in the top nozzle when the fixture is positioned thereon;

(b) a tool holder supported on the tool guide adjacent one side thereof and guided for movement relative thereto in opposite directions corresponding to the axial directions of said openings;

(c) actuating means for moving the tool holder in said opposite directions between two positions thereof; and

(d) a plurality of locking-tube removal tools each comprising:-

(i) an elongated tubular member affixed to the tool guide in axial alignment with one of said openings and axially extending from the side of the tool guide opposite to said one side thereof, said tubular member having a locking-tube gripping portion adjacent the distal end thereof and having a length sufficient to place said gripping portion inside the locking tube in the guide-thimble end portion within the associated passageway of the top nozzle when the fixture is positioned thereon, said gripping portion being radially expandable and collapsible into and from, respectively, gripping relationship with respect to said locking tube; and

(ii) a rod member affixed at one end thereof to said tool holder and extending therefrom movably through the associated opening of the tool guide and through said tubular member axially aligned therewith, said rod member having a spreader portion which cooperates with said gripping portion of the tubular member and is shaped such as to expand the gripping portion into gripping relationship with said locking tube upon movement of the tool holder to one of said two positions thereof, and to enable said gripping portion to collapse out of said gripping relationship upon movement of the tool holder to the other of said two positions.

When this fixture is mounted and positioned upon the top nozzle from which the locking tubes are to be removed, the various locking-tube removal tools on the tool holder will extend into the locking tubes within the respective passageways of the top nozzle, and their gripping portions will be in position to be expanded into gripping relationship with the locking tubes. Upon operation of the actuating means causing the tool holder to move to said one position thereof, the gripping portions of the tubular members of all removal tools will be expanded and then will grip and pull the locking tubes from their locking position as the whole fixture is lifted off the top nozzle. Since the gripping portions of the removal tools will not release the locking tubes until allowed to collapse, and since this will happen only upon operation of the actuating means effecting movement of the tool holder to said other position thereof, there is no risk that any of the locking tubes held captive on the removal tools will inadvertently escape and be lost during the removal operation and while the fixture together with the removed locking tubes is moved about, e.g., to some tube disposal station.

The actuating means for moving the tool holder preferably comprises a shaft which is rotatably connected to one, and is threadedly engaged with the other, of the tool guide and tool holder, and which has an end portion with two heads formed thereon, one which is engageable with a long-handled tool for rotating the shaft to effect movement of the tool holder, and another which is engageable with a long-handled tool for lifting and moving the fixture as a whole. The shaft serves also to support the tool holder on the tool guide, the tool holder being guided in its movements by means of pins secured to one of the tool holder and tool guide and slideably extending through holes formed in the other. The means for mounting and positioning the fixture upon the top nozzle preferably include positioning pins disposed on and extending from the tool guide, and which pins are insertable into corresponding bores formed in the top nozzle.

The gripping portion of the tubular member of each removal tool preferably has the form of a segmented sleeve with an outwardly turned radial rim which comes to lie directly beneath the respective locking tube when the fixture is in place. The outer diameter of the rim varies as the segmented sleeve together with its segmented rim is expanded or allowed to collapse, the outer rim diameter being smaller than the inner diameter of the locking tube when the sleeve is in its collapsed condition, and being larger than the inner diameter of the locking tube when the sleeve is expanded The rod member of each removal tool has a spreader portion which is cooperable with the gripping portion of the associated tubular member so as to expand it upon movement of the tool holder to said one position thereof, and to allow it to collapse when the tool holder is moved to its other position.

A preferred embodiment of the invention will now be described, by way of example only, with reference to the accompanying drawings, in which:

Figure 1 is a fragmentary side-elevational view of an upper end portion of a reconstitutable fuel assembly, and of a fixture embodying the invention;

Figure 2 is a top plan view of the fixture as seen when viewed in the direction of the arrows on line 2-2 in Figure 1;

Figure 3 is a fragmentary perspective view of an end portion of a long-handled actuating tool, with portions broken away, for moving the fixture;

Figure 4 is a fragmentary perspective view of an end portion of another long-handled actuating tool, with portions broken away, for actuating the tool holder of the fixture;

Figure 5 is a fragmentary side elevational view similar to Figure 1 but showing the tool holder of the fixture in an engaged position and ready for a locking tube removal operation;

Figure 6 is a sectional view taken along line 6-6 of Figure 5; and

Figure 7 is a side elevational view, on a reduced scale, showing the fixture of Figure 1 after removal thereof from the top nozzle and a removal tool thereon still securely holding a removed locking tube.

In the following description, like reference characters designate like or corresponding parts throughout the several views of the drawings, and terms such as "forward", "rearward", "left", "right", "upwardly", "downwardly", and the like, are employed as words of convenience not to be construed as limiting terms.

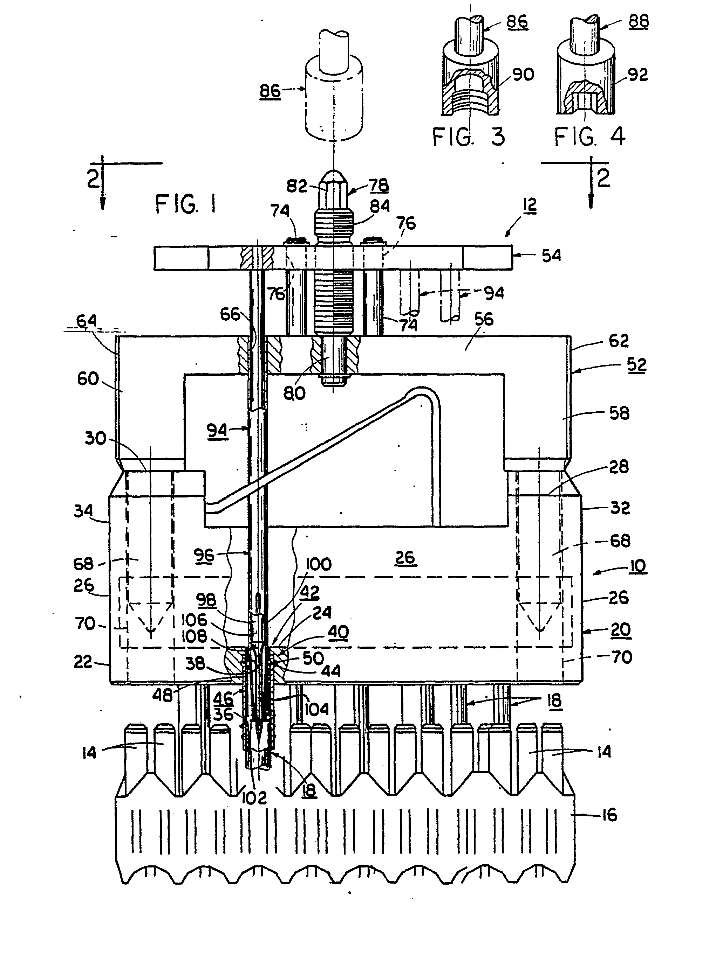

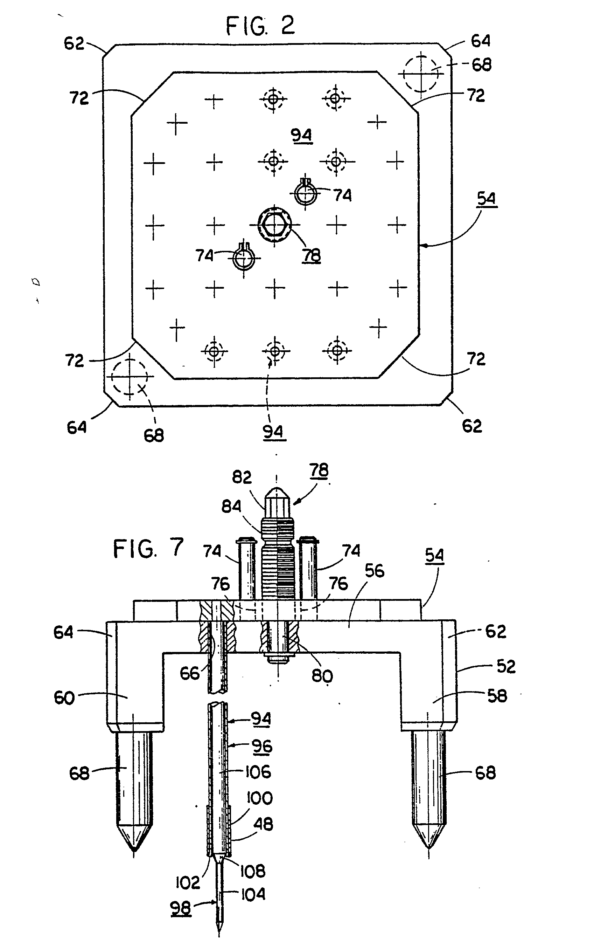

Referring now to the drawings, and particularly to Figure 1, the reconstitutable fuel assembly partially shown therein is generally designated with reference numeral 10, and the locking-tube removal fixture embodying the invention is generally designated with reference numeral 12.

Basically, the fuel assembly 10, being of conventional construction, comprises an array of fuel rods 14 held in spaced relationship with respect to one another by grids 16 (only one is shown) spaced axially along the fuel assembly. Each fuel rod 14 is sealed at its opposite ends and contains nuclear fuel pellets (not shown) of fissile material. The reconstitutable fuel assembly 10 includes further a plurality of guide tubes or thimbles 18 to which the grids 16 are attached. At their opposite ends, the guide thimbles 18 extend somewhat beyond the ends of the fuel rods 14 and are attached to a bottom nozzle (not shown) and a top nozzle 20, respectively. As well known in the art, at least some of the guide thimbles 18 will have control rods disposed therein, when in use, which control rods will be connected to a rod cluster control mechanism (not shown) supported by the top nozzle 20 and operable to move the control rods axially in the guide thimbles 18 for the purpose of controlling the fission process in the fuel assembly 10.

As illustrated in Figure 1, the top nozzle 20 comprises a housing 22 having a lower adapter plate 24 surrounded by four interconnected, upstanding side walls 26 with raised sets of pads 28, 30 (only one pad in each set is shown) located at respectively pairs of diagonal corners 32, 34 formed by the side walls 26. The control rod guide thimbles 18 have their uppermost end portions 36 coaxially positioned within control rod passageways 38 formed through the adapter plate 24 of the top nozzle 20. For gaining access to the fuel rods 14, the adapter plate 24 of the top nozzle 20 is removably connected to the upper end portions 36 of the guide thimbles 18 by means of attaching structure generally designated 40 and to be described hereinafter to an extent deemed desirable to facilitate an understanding of the structure and operation of the locking tube removal fixture 12 embodying the invention.

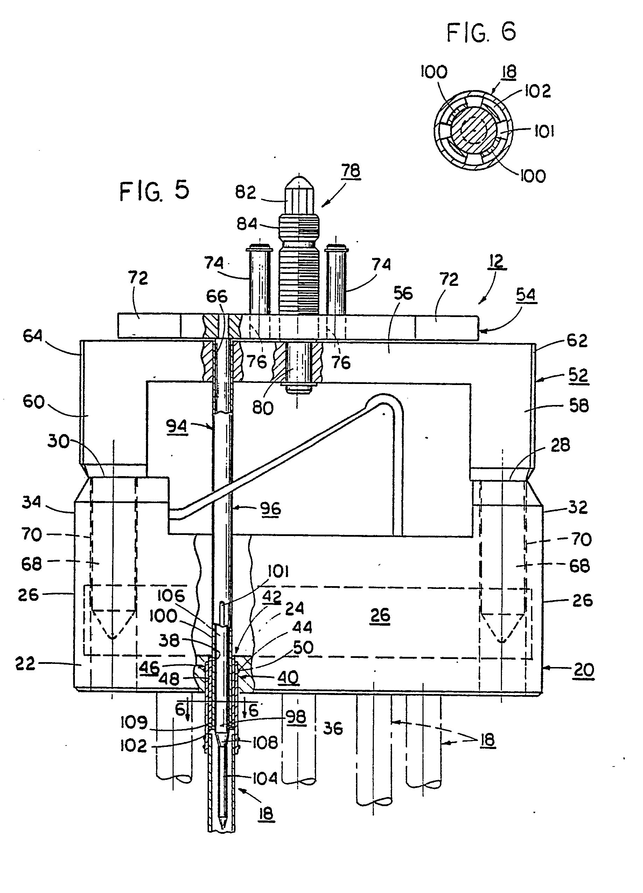

As seen from Figures 1 and 5, the attaching structure 40 associated with each guide thimble 18 comprises an outer socket 42 defined in the adapter plate 24 by the respective passageway 38 having an annular groove 44 formed circumferentially in the wall thereof, an inner socket 46 formed by an upper end portion 36 of the respective guide thimble 18, and a removable locking tube 48 inserted into the inner socket 46 to maintain it in locking engagement with the outer socket 42, the inner socket 46 being provided with an annular circumferential bulge 50 engaged with the annular groove 44 of the outer socket 42. A plurality of elongated longitudinal slots (not shown) is formed in the upper end portion 36 of each guide thimble 18 to permit elastic inward collapse of the slotted end portion to a compressed position allowing the circumferential bulge 50 thereon to be engaged with and disengaged from the annular groove 44.

The locking tubes 48 are inserted from above the top nozzle 20 into the hollow upper end portions 36 of the respective guide thimbles 18 forming the inner sockets 46. When in its locking position, each locking tube 48 prevents collapse of the associated inner socket 46 and, hence, positively maintains the bulge 50 thereon in locking engagement with the annular groove 44, thus preventing a withdrawal of the inner socket 46 from the outer socket 42.

Ordinarily, the locking tubes 48 are dimensioned to form a sufficiently firm frictional fit with the side walls of the associated passageways 38 to stay in their locking positions. However, in order to additionally safeguard against their coming loose under vibration or the like, the locking tubes 48 may be provided with suitable means, such as dimples or bulges (not shown), cooperating with the concave surfaces of the circumferential bulges 50 in the inner sockets 46 to hold the locking tube 48 securely in their locking positions.

For the purpose of inspecting, removing, replacing and/or rearranging fuel rods 14 in the reconstitutable fuel assembly 10, the latter must be removed from the reactor core and lowered into a work station (not shown) by means of a suitable handling tool (not shown). In the work station, the fuel assembly is submerged in coolant, and maintenance operations are performed through manipulation of remotely controlled submersible equipment, one component of which is the fixture 12 for removing the locking tubes 48 as a first step in removing the top nozzle 20 from the reconstitutable fuel assembly 10, and other components of which may be a fixture (not shown), such as described in Applicants' copending patent application EP-A- 183068 to be used, after the removal of the locking tubes, for removing and subsequently remounting the top nozzle respectively from and on the guide thimbles of the reconstitutable fuel assembly, and a fixture (not shown), such as described in Applicants' copending patent application EP-A- 187651, for replacing the removed locking tubes in their locking positions after the top nozzle has been remounted on the fuel assembly 10.

Referring again to Figure 1, the fixture 12 for removing the locking tubes 48 from their locking positions comprises a tool guide 52 and a tool holder 54 movable relative to the tool guide 52.

The tool guide 52 comprises a thick central plate 56, and sets of pedestals 58, 60 (only one pedestal in each set is shown) located at respective pairs of diagonal corners 62, 64 (see also Figure 2) of the central plate 56. The central plate 56 is generally rectangular and has formed therethrough a plurality of openings 66 (only one being shown in Figures 1, 5 and 7) arranged in a pattern identical to that of the passageways 38 in the adapter plate 24 of the top nozzle 20, the arrangement being such that when the tool guide 52 is mounted in its proper position for moving the locking tubes, the openings 66 will be axially aligned with the respective passageways 38 in the adapter plate of the top nozzle 20.

In order to facilitate the proper positioning of the tool guide 52 upon the top nozzle 20, each of the pedestals 60 at the diagonal corners 64 of the tool guide is provided with a positioning pin 68 slidably fitting into a bore 70 in the corresponding corner pad 30 of the top nozzle 20.

The tool holder 54 likewise is of generally rectangular configuration, with bevelled corners 72, and it is mounted above the tool guide 52 for movement between an upper position (Figure 1) distant from the guide 52, and a lower position (Figures 5 and 7) adjacent the guide 52. The tool holder 54 is guided, for rectilinear movement thereof between these positions, by means of a pair of upstanding guide pins 74 disposed on the central plate 56 of the tool guide 52, and slidably extending through a pair of holes 76 formed in the tool holder 54.

The fixture 12 also includes means for moving the tool holder 54 relative to the tool guide 52 between its upper and lower positions, which means comprises a central shaft 78 which interconnects the tool guide 52 and the holder 54, the shaft 78 having a lower end portion 80 thereof rotatably connected to the tool guide 52, and having an externally threaded portion thereof threadedly engaged in an internally threaded opening of the tool holder 54. Rotation of the shaft 78 in one direction, e.g. clockwise, will cause the tool holder 54 to move from its upper position (Figure 1) to its lower position (Figures 5 and 7), and rotation of the shaft 78 in an opposite direction, e.g. counterclockwise, will cause the tool holder 54 to move from its lower to its upper position.

The shaft 78 has adjacent its upper end a hex head 82 and, therebelow, a threaded head 84. A long-handled tool 86 (see also Figure 3) with an internally threaded socket 90 is threadedly engageable with the threaded head 84 of the shaft 78 to be used for mounting and lifting the fixture 12 on and from, respectively, the top nozzle 20, and a long-handled tool 88 (see also Figure 4) with a hex-shaped socket 92 is engageable with the hex-head of the shaft 78 to be used for rotating the latter so as to lower or raise the tool holder 54 relative to the tool guide 52. It will be noted that the threaded head 84 is sufficiently larger in diameter than the hex head 82 to serve as a stop for the hex-shaped socket 92 of the tool 88, and to allow the threaded socket 90 of the tool 86 to be slipped over the hex head 82.

. The fixture 12 includes further a plurality of locking-tube removal tools generally designated 94, only one such tool being illustrated in detail in Figures 1, 5 and 7 whereas several of the remaining tools are only partially shown in phantom in Figure 1. It should be understood that the following description of the one tool 94 applies equally to each of the remaining tools 94 utilized. Preferably, the full complement of tools 94 employed equals in number that of the locking tubes 48 used in the fuel assembly in conjunction with which the fixture 12 is to be utilized, and the tools 94 are arranged on the tool holder 54 in a pattern identical to that of the openings 66 in the tool guide 52, as indicated in Figure 2.

Each of the locking-tube removal tools 94 comprises a locking-tube engaging means in the form of an elongate tubular member 96 which is attached to the tool guide 52 and in axial alignment with one of the openings 66 therein. The tool 94 includes further an elongate actuating means in the form of a rod 98 which is mounted on the tool holder 54 and extends axially through the aligned opening 66 in the tool guide 52 and through the tubular member 96 attached thereto. The tubular member 96 depending from the tool guide 52 is long enough to extend into the guide thimble end portions 36 in the aligned passageway 38 of the adapter plate 24 when the tool guide 52 is mounted on the top nozzle 20, as shown seen in Figures 1 and 5. The rod 98 is axially moved in the tubular member 96 through movement of the tool holder 54 between its upper and lower positions.

The tubular member 96 has a locking-tube gripping portion 100 disposed adjacent its lower end and formed as a segmented sleeve 100 having a plurality of longitudinal slots 101 (Figure 6). The sleeve 100 tapers from the generally uniform diameter of the major portion of the member 96 to a progressively smaller diameter and terminates in an annular segmented flange or rim 102 extending radially outward. Because of the slots 101 segmenting the sleeve 100 and its lower rim 102, the sleeve 100 together with the rim 102 is radially expandable and collapsible throughout its circumference. In its expanded condition, the rim 102 has an outer diameter exceeding the inner diameter of each locking tube 48, whereas upon collapse of the sleeve 100, the outer diameter of the rim 102 decreases to less than the inside diameter of the locking tube 48.

The rod 98 has a spreader portion in the form of a short tapered shoulder 108 defined between lower and upper cylindrical portions 104, 106 of the rod. The lower shaft portion 104 has an outer diameter which is smaller than the least inner diameter of the segmented tapered sleeve 100 and rim 102 of the tubular member 96, and therefore it is freely movable in and through the lower end portion of the tubular member 96. At the short tapered shoulder 108, the outer diameter of the rod 98 increases to its maximum corresponding to the outer diameter of the upper rod portion 106 which is greater than the inner diameter of the sleeve 100 and rim 102 when collapsed. Consequently, when the tool holder 54 is in its upper position (Figure 1) corresponding to a disengaged position of the rod 98 with regard to the sleeve 100 of the tubular member 96, the lower portion 104 of the rod 98 extends through the sleeve 100 with radial clearance allowing the sleeve 100 to assume its collapsed position. Upon movement of the tool holder 54 from its upper position to its lower position (Figures 5 and 7) corresponding to an engaged position of the rod 98 relative to the sleeve 100 of the tubular member 96, the upper portion 106 of the shaft 98 is advanced into the sleeve 100, thereby expanding the latter sufficiently to move its rim 102 beneath the lower edge 109 of the locking tube 48.

Use and operation of the locking-tube removal fixture 12 are as follows. Initially, the long-handled tool 86 is threadedly engaged with the threaded head 84 of the shaft 78 and then used to position and mount the tool guide 52 together with the tool holder 54 and the tools 94 thereon upon the top nozzle 20 of the reconstitutable fuel assembly 10, such that the tools 94 extend into the locking tubes 48 disposed in their locking positions within the upper end portions 36 of the respective guide thimbles 18 locked in place within the passageways 38 of the adapter plate 24. The tool 86 is then disengaged from the threaded head 84 of the central shaft 78, and the other tool 88 is engaged with the hex head 82 of the shaft 78 and turned, e.g. clockwise, to effect movement of the tool holder 54 from its upper position (Figure 1) to its lower position (Figure 5). This downward movement of the tool holder 54 causes the larger-diameter portions 106 of the rods 98 of all tools 94 to advance into the segmented sleeves 100 of the respective associated therewith, thereby expanding the sleeves 100 and moving their rims 102 beneath the lower edges 109 of the respective locking tubes 48.

The tool 88 is then removed, and the other tool 86 is reengaged with the threaded head 84 of the central shaft 78 to be used in lifting the whole fixture 12 in a manner such as to cause the locking tubes 48 to be forced from their locking positions and pulled out of the upper end portions 36 of the respective guide thimbles 18. The fixture 12 together with the removed locking tubes 48 while held captive on the respective tools 94 is transported to and placed upon a disposal canister (not shown) with holes for the two positioning pins 68 on the tool guide 52 to enter. With the fixture 12 thus resting upon the canister, the tool 86 is removed, and the tool 88 is reengaged with the hex head 82 of the central shaft 78 and then is turned, e.g. counter-clockwise, so as to raise the tool holder 54 to its upper position, thus withdrawing the larger-diameter portions 106 of the rods 98 from the segmented sleeves 100 of the tubular members 96 associated therewith, whereupon the sleeves 100 will contract, or collapse, and thereby release the locking tubes 48 which will drop into the disposal container.

It is seen that inadvertent release of the locking tubes 48 from the removal fixture 12 during transfer of the latter from the fuel assembly 10 in the work station to the disposal canister is not possible since the tool holder 54 cannot be raised relative to the tool guide 52 unless the latter is prevented from rotating, as is the case only when the positioning pins 68 are inserted in the bores 70 of the top nozzle or in similar bores or holes formed in a flange of the disposal canister.

## Claims

1. A fixture for simultaneously removing a plurality of locking tubes (48) from locking positions within upper end portions (36) of guide thimbles (18) inserted in passageways formed through a plate (24) of a top nozzle (20) of a reconstitutable nuclear fuel assembly (10), characterized by the combination comprising:

(a) a tool guide (52) including means (58, 60, 68) for mounting and positioning the fixture upon said top nozzle (20), said tool guide having openings (66) which extend therethrough and which are arrayed in a pattern such as to be axially aligned with the respective passageways (38) in the top nozzle when the fixture is positioned thereon.

(b) a tool holder (54) supported on the tool guide (52) adjacent one side thereof and guided for movement relative thereto in opposite directions corresponding to the axial directions of said openings (66);

(c) actuating means (78) for moving the tool holder (54) in said opposite directions between two positions thereof; and

(d) a plurality of locking-tube removal tools (94) each comprising:-

(i) an elongated tubular member (96) affixed to the tool guide (52) in axial alignment with one of said openings (66) and axially extending from the side of the tool guide opposite to said one side thereof, said tubular member (96) having a locking-tube gripping portion (100) adjacent the distal end thereof and having a length sufficient to place said gripping portion inside the locking tube (48) in the guide-thimble end portion (36) within the associated passageway (38) of the top nozzle when the fixture is positioned thereon, said gripping portion (100) being radially expandable and collapsible into and from, respectively, gripping relationship with respect to said locking tube; and

(ii) a rod member (98) affixed at one end thereof to said tool holder (54) and extending therefrom movably through the associated opening (66) of the tool guide and through said tubular member (96) axially aligned therewith, said rod member (98) having a spreader portion (108) which cooperates with said gripping portion (100) of the tubular member (96) and is shaped such as to expand the gripping portion into gripping relationship with said locking tube upon movement of the tool holder (54) to one of said two positions thereof, and to enable said gripping portion to collapse out of said gripping relationship upon movement of the tool holder to the other of said two positions.

2. A fixture according to claim 1, characterized in that said gripping portion (100) comprises a segmented sleeve having an out-turned radial rim (102) located to be positioned directly beneath said locking tube (48) when the fixture is positioned upon the top nozzle, said radial rim (102) having an outer diameter which is less than the inner diameter of said locking tube when the gripping portion is collapsed and is greater than the inner diameter of the locking tube when the gripping portion is expanded.

3. A fixture according to claim 2, characterized in that said segmented sleeve (100) is tapered toward said distal end of the tubular member (96) and has said radial rim (102) disposed thereon adjacent its end with the lesser diameter, said spreader portion (108) of the rod member (98) being moved inwardly of the tapered segmented sleeve (100) and toward the lesser diameter-end thereof upon movement of said tool holder (54) to said one position, and being moved in the opposite direction and withdrawn from said tapered segmented sleeve upon movement of the tool holder to said other position thereof.

4. A fixture according to claim 2 or 3, characterized in that said spreader portion (108) comprises a short tapered shoulder.

5. A fixture according to claim 4, characterized in that said rod member (98) has two cylindrical portions (104, 106) of different diameters disposed axially adjacent each other and with said short tapered shoulder (108) formed therebetween, the cylindrical portion (104) with the smaller diameter being freely movable in and through said segmented tapered sleeve (100), its outer diameter being smaller than the least inner diameter of the sleeve, and the other cylindrical portion (106) having a diameter less than the inner diameter of the portion of the tubular member between the tool guide and said segmented tapered sleeve (100), and larger than any inner diameter of the tapered sleeve when collapsed.

6. A fixture according to any one of the preceding claims, characterized in that said actuating means (78) comprises a shaft rotatably connected to one, and threadedly engaged with the other, of said tool guide (52) and said tool holder (54).

7. A fixture according to claim 6, characterized in that said shaft (78) has a pair of heads (82, 84), one (82) of which is engageable with a tool (88) for rotating the shaft, and the other (84) of which is engageable with a tool (86) for lifting and moving the fixture as a whole.

8. A fixture according to claim 6 or 7, characterized in that said tool holder (54) is supported on said tool guide (52) by means of said shaft (78) and is guided in its movements by means of pins (76) secured to one of the tool guide and tool holder and slidably extending through openings (76) formed in the other.

9. A fixture according to any one of the preceding claims, characterized in that said means (58, 60, 68) for mounting and positioning the fixture upon said top nozzle (20) include positioning pins (68) disposed on the tool guide (54) and extending therefrom, said positioning pins being insertable into corresponding bores (70) formed in the top nozzle.

**Patentansprüche**

1. Haltevorrichtung zum gleichzeitigen Ausbau einer Mehrzahl von Arretierungsrohren (48) aus Arretierungsstellen in den oberen Endbereichen (36) von Führungsrohren, die in Durchgangskanälen einer Platte (24) eines oberen Mundstücks (20) eines wiederherstellbaren Kernbrennelements (10) eingesetzt sind, gekennzeichnet durch folgende Kombination:

a) eine Werkzeugführung (52) mit Mitteln (58, 60, 68) zur Montage und Positionierung der Haltevorrichtung auf dem oberen Mundstück (20), wobei die Werkzeugführung Öffnungen (66) aufweist, die hindurchverlaufen und in einem solchen Muster angeordnet sind, daß sie bei auf das obere Mundstück aufgesetzter Haltevorrichtung mit deren betreffenden Kanälen (38) axial fluchten,

b) einen auf einer Seite der Werkzeugführung (52) gehalterten und relativ dazu in entgegengesetzten Richtungen entsprechend den Axialrichtungen der genannten Öffnungen (66) verschiebbaren Werkzeughalter (54),

c) Betätigungsmittel (78) zum Verschieben des Werkzeughalters (54) in den entgegengesetzten Richtungen zwischen zwei Positionen, und

d) eine Mehrzahl von Arretierungsrohr-Ausbauwerkzeugen (94), die jeweils aufweisen:

i) ein längliches Rohrteil (96), das mit einer der genannten Öffnungen (66) axial fluchtend und von der bezüglich der genannten einen Seite abgewandten Seite der Werkzeugführung axial wegragend an der Werkzeugführung (52) befestigt ist, wobei das Rohrteil (96) an seinem distalen Ende einen Arretierungsrohr-Greifabschnitt (100) und eine so ausreichende Länge aufweist, um den Greifabschnitt innerhalb des Arretierungsrohres (48) in dem Führungsrohr-Endbereich (36) innerhalb des betreffenden Kanals (38) des oberen Mundstücks zu plazieren, wenn die Haltevorrichtung auf das obere Mundstück aufgesetzt ist, und wobei der Greifabschnitt (100) radial in bzw. außer Eingriff mit dem Arretierungsrohr spreizbar bzw. verengbar ist, und

ii) ein mit seinem einen Ende an dem Werkzeughalter (54) befestigtes und von diesem aus verschiebbar durch die zugehörige Öffnung (66) der Werkzeugführung und durch das axial damit fluchtende Rohrteil (96) verlaufendes Stabteil (98), das einen Spreizabschnitt (108) aufweist, der mit dem Greifabschnitt (100) des Rohrteils (96) zusammenwirkt und derart gestaltet ist, daß er den Greifabschnitt in Eingriff mit dem Arretierungsrohr spreizt, wenn der Werkzeughalter (54) in eine seiner beiden Positionen bewegt wird, und daß er den Greifabschnitt außer Eingriff sich verengen läßt, wenn der Werkzeughalter in die andere seiner beiden Positionen bewegt wird.

2. Haltevorrichtung nach Anspruch 1, dadurch gekennzeichnet, daß der genannte Greifabschnitt (100) eine segmentierte Hülse mit einem auswärtsgebogenen radialen Rand (102) aufweist, der bei auf dem oberen Mundstück positionierter Haltevorrichtung direkt unterhalb des Arretierungsrohrs (48) zu liegen kommt und einen Außendurchmesser aufweist, der bei verengtem Greifabschnitt kleiner als der Innendurchmesser des Arretierungsrohres und bei gespreiztem Greifabschnitt größer als der Innendurchmesser des Arretierungsrohres ist.

3. Haltevorrichtung nach Anspruch 2, dadurch gekennzeichnet, daß die segmentierte Hülse (100) sich zum distalen Ende des Rohrteils (96) hin verjüngt und den genannten radialen Rand (102) an seinem Ende mit geringerem Durchmesser aufweist, und daß der Spreizabschnitt (108) des Stabteils (98) in die verjüngte segmentierte Hülse (100) hinein und zu deren Ende mit verringertem Durchmesser hin bewegt wird, wenn der Werkzeughalter (54) in die genannte eine Position verschoben wird, und in entgegengesetzter Richtung bewegt und aus der verjüngten segmentierten Hülse herausgezogen wird, wenn der Werkzeughalter in seine andere Position verschoben wird.

4. Haltevorrichtung nach Anspruch 2 oder 3, dadurch gekennzeichnet, da8 der Spreizabschnitt (108) eine kurze verjüngte Schulter aufweist.

5. Haltevorrichtung nach Anspruch 4, dadurch gekennzeichnet, daß das Stabteil (98) zwei zylindrische Abschnitte (104, 106) mit unterschiedlichen Durchmessern aufweist, die axial angrenzend aneinander angeordnet sind, wobei die genannte kurze verjüngte Schulter (108) dazwischen gebildet ist, und wobei der zylindrische Abschnitt (104) mit dem kleineren Durchmesser frei in der und durch die segmentierte verjüngte Hülse (100) verschiebbar und sein äußerer Durchmesser kleiner als der kleinste Innendurchmesser der Hülse ist, und der andere zylindrische Abschnitt (106) einen Durchmesser hat, der kleiner als der Innendurchmesser des Abschnitts des Rohrteils zwischen der Werkzeugführung und der segmentierten verjüngten Hülse (100) und größer als irgendein Innendurchmesser der verjügten Hülse im verengten Zustand ist.

6. Haltevorrichtung nach einem der vorhergehenden Ansprüche, dadurch gekennzeichnet, daß die Betätigungsmittel (78) eine Stange aufweisen, die mit einem der Bauteile Werkzeugführung (52) und Werkzeughalter (54) drehbar verbunden ist und mit dem anderen in Schraubverbindung steht.

7. Haltevorrichtung nach Anspruch 6, dadurch gekennzeichnet, daß die Stange (78) zwei Köpfe (82, 84) aufweist, von denen einer (82) mit einem Werkzeug (88) zum Drehen der Stange in Zusammenwirkung bringbar und der andere (84) mit einem Werkzeug (86) zum Anheben und Bewegen der Haltevorrichtung insgesamt in Zusammenwirkung bringbar ist.

8. Haltevorrichtung nach Anspruch 6 oder 7, dadurch gekennzeichnet, daß der Werkzeughalter (54) mittels der genannten Stange (78) an der Werkzeugführung (52) gehaltert und in seinen Bewegungen mittels Stiften (76) geführt ist, die an einem der Bauteile Werkzeugführung und Werkzeughalter befestigt und in Durchgangsbohrungen (76) im anderen Bauteil gleitend verschiebbar sind.

9. Haltevorrichtung nach einem der vorhergehenden Ansprüche, dadurch gekennzeichnet, daß die Mittel (58, 60, 68) zur Montage und Positionierung der Haltevorrichtung auf dem oberen Mundstück (20) Positionierzapfen (68) aufweisen, die auf der Werkzeugführung (54) angeordnet sind und von dieser wegragen und in entsprechende Bohrungen (70) in dem oberen Mundstück einsetzbar sind.

**Revendications**

1. Appareillage pour enlever simultanément une pluralité de tubes de verrouillage (48) de positions de verrouillage à l'intérieur de parties extrêmes supérieures (36) de tubes-guides (18) introduits dans des passages ménagés à travers une plaque (24) d'un embout supérieur (20) d'un assemblage combustible nucléaire reconstitutable (10), caractérisé par la combinaison comprenant:

(a) un guide-outil (52) comprenant des moyens (58, 60, 68) pour monter et mettre en place l'appareillage sur ledit embout supérieur (20), ledit guide-outil ayant des ouvertures (66) qui s'étendent à travers celui-ci et qui sont agencées selon une configuration telle qu'elles sont alignées axialement avec les passages (38) correspondants présents dans l'embout supérieur quand l'appareillage est en place sur celui-ci;

(b) un porte-outil (54) supporté sur le guide-outil (52) de façon contiguë à un premier côté de celui-ci et guidé pour se déplacer par rapport à celui-ci dans des directions opposées correspondant aux sens axiaux desdites ouvertures (66);

(c) un moyen d'actionnement (78) pour déplacer le porte-outil (54) dans lesdites directions opposées entre deux positions de celui ci; et

(d) une pluralité d'outils (94) d'enlèvement de tubes de verrouillage comportant chacun:

(i) un élément tubulaire allongé (96) fixé au guide-outil (52) en alignement axial avec une desdites ouvertures (66) et s'étendant axialement depuis le côté du guide-outil opposé audit premier côté de celui-ci, ledit élément tubulaire (96) ayant une partie (100) pour le serrage d'un tube de verrouillage, contiguë à l'extrémité distale de celui-ci et ayant une longueur suffisante pour la mise en place de ladite partie pour serrage à l'intérieur du tube de verrouillage (48) dans la partie extrême (36) d'un tube-guide à l'intérieur du passage (38) correspondant de l'embout supérieur quand l'appareillage est en place sur celui-ci, ladite partie pour serrage (100) étant radialement dilatable et rétractable respectivement pour établir et supprimer une relation de serrage par rapport audit tube de verrouillage; et

(ii) un organe formant tige (98) fixé au niveau d'une première extrémité de celui-ci audit porte-outil (54) et s'étendant de manière mobile depuis celui-ci à travers l'ouverture (66) correspondante du guide outil et à travers ledit élément tubulaire (96) aligné axialement avec celle-ci, ledit organe formant tige (98) ayant une partie pour écartement (108) qui coopère avec ladite partie pour serrage (100) de l'élément tubulaire (96) et a une forme conçue pour dilater la partie pour serrage jusqu'à l'amener en relation de serrage avec ledit tube de verrouillage lors du déplacement du porte-outil (54) jusqu'à l'une des deux positions de celui-ci, et pour permettre à ladite partie pour serrage de se contracter et de mettre fin à ladite relation de serrage lorsque le porte-outil va jusqu'à l'autre desdites deux positions.

2. Appareillage selon la revendication 1, caractérisé en ce que ladite partie (100) pour serrage comporte un manchon segmenté ayant un bord radial (102) tourné vers l'extérieur, situé pour être placé juste sous ledit tube de verrouillage (48) quand l'appareillage est en place sur l'embout supérieur, ledit bord radial (102) ayant un diamètre extérieur inférieur au diamètre intérieur dudit tube de verrouillage quand la partie pour serrage est rétractée, et supérieur au diamètre intérieur du tube de verrouillage quand la partie pour serrage est dilatée.

3. Appareillage selon la revendication 2, caractérisé en ce que ledit manchon segmenté (100) est conique vers ladite extrémité distale de l'élément tubulaire (96), ledit bord radial (102) étant disposé sur celui-ci de manière contiguë à son extrémité de petit diamètre, ladite partie pour écartement (108) de l'organe formant tige (98) étant déplacée vers l'intérieur du manchon segmenté conique (100) et vers l'extrémité de petit diamètre de celui-ci quand ledit porte-outil (54) vient jusque dans ladite première position, et étant déplacée en sens inverse et sortie dudit manchon segmenté conique quand le porte-outil vient jusque dans ladite autre position de celui-ci.

4. Appareillage selon la revendication 2 ou 3, caractérisé en ce que ladite partie pour écartement (108) comporte un court épaulement conique.

5. Appareillage selon la revendication 4, caractérisé en ce que ledit organe formant tige (98) a deux parties cylindriques (104, 106) de diamètres différents disposées axialement l'une contiguë à l'autre, ledit court épaulement conique (108) étant formé entre celles-ci, la partie cylindrique (104) de petit diamètre étant librement mobile dans et à travers ledit manchon segmenté conique (100), son diamètre extérieur étant plus petit que le plus petit diamètre intérieur du manchon, et l'autre partie cylindrique (106) ayant un diamètre inférieur au diamètre intérieur de la partie de l'élément tubulaire située entre le guide-outil et ledit manchon segmenté conique (100), et supérieur à n'importe quel diamètre intérieur du manchon conique quand il est contracté.

6. Appareillage selon l'une quelconque des revendications précédentes, caractérisé en ce que ledit moyen d'actionnement (78) comporte un arbre relié de manière rotative soit audit guide-outil (52) soit audit porte-outil (54), et relié par vissage à l'autre de ces deux derniers.

7. Appareillage selon la revendication 6, caractérisé en ce que ledit arbre (78) a deux têtes (82, 84) dont l'une (82) peut être reliée à un outil (88) pour faire tourner l'arbre, et dont l'autre (84) peut être reliée à un outil (86) pour soulever et déplacer l'ensemble de l'appareillage.

8. Appareillage selon la revendication 6 ou 7 caractérisé en ce que ledit porte-outil (54) est supporté sur ledit guide outil (52) à l'aide dudit arbre (78) et est guidé dans ses mouvements à l'aide d'axes (76) fixés soit au guide-outil soit au porte-outil et s'étendant de manière coulissante à travers des ouvertures (76) ménagées dans l'autre de ces deux derniers.

9. Appareillage selon l'une quelconque des revendications précédentes, caractérisé en ce que lesdits moyens (58, 60, 68) pour monter et mettre en place l'appareillage sur ledit embout supérieur (20) comprennent des axes de positionnement (68) disposés sur le guide-outil (54) et s'étendant depuis celui-ci, lesdits axes de positionnement étant insérables dans des trous (70) correspondants formés dans l'embout supérieur.

EP 0 189 797 B1

FIG. 3

FIG. 4

FIG. 1

FIG. 2

FIG. 7

FIG. 6

FIG. 5